# EUROPÄISCHE PATENTANMELDUNG

(11) **EP 0 623 498 A1**
(43) Veröffentlichungstag der Anmeldung: **09.11.1994**
(21) Anmeldenummer: 94106193.9
(22) Anmeldetag: 21.04.1994
(51) Int. Cl.: B61D 47/00, B61D 3/04, B60P 1/64

(54) **Ladevorrichtung für Lastträger**

(30) Priorität: 07.05.1993 DE 4315219
(71) Anmelder: Linke-Hofmann-Busch GmbH, D-38239 Salzgitter (DE)
(72) Erfinder: Beier, Günter, Dipl.-Ing., D-38259 Salzgitter (DE); Hahne, Jochen, Dipl.-Ing., D-38124 Braunschweig (DE); Uhlich, Klaus, D-38118 Braunschweig (DE); Asche, Günter, D-38268 Lengede (DE); Böhm, Wolfgang, Dipl.-Ing., D-38118 Braunschweig (DE); Rudolph, Rüdiger, Dipl.-Ing., D-38640 Goslar (DE)

(57) **Zusammenfassung**

Die Erfindung betrifft eine Ladevorrichtung für Lastträger, insbesondere für genormte Wechselbehälter oder Paletten oder Container, verwendbar für Lkw-Ladeflächen oder Waggons, die Hub-, Zentrier- und/oder Feststelleinrichtungen zur lagegenauen Plazierung des Lastträgers auf dem Fahrzeug (F) bzw. dessen Ladefläche (7) aufweist. Die Ladevorrichtung umfaßt eine antreibbare Hubvorrichtung mit einem, über mindestens zwei Schwingen (21), höhenbeweglichen waagerechten Stützrahmen (3), wobei die Ladevorrichtung Mittel zum Waagerechthalten des Stützrahmens (3) während seiner Vertikalbewegung und Mittel zum waagerechten Versetzen des Lastträgers auf dem Stützrahmen (3) aufweist. Spezielle Führungseinrichtungen und Zentriereinrichtungen sorgen für eine exaktes vertikales Heben des Stützrahmens (3) und Positionieren des Lastträgers, nachdem dieser von dem Stützrahmen (3) aufgenommen wurde. Bei einem Eisenbahnzug können sämtliche Ladevorrichtungen miteinander gekoppelt werden, so daß gleichzeitig eine Vielzahl von Lastträgern aufgenommen und zentriert werden kann.

## Beschreibung

Die Erfindung betrifft eine Ladevorrichtung für Lastträger, insbesondere genormte Wechselbehälter, umfassend wahlweise einzelne oder kombinierte Hub-, Zentrier- und Feststelleinrichtungen zur lagegenauen Plazierung des Lastträgers auf einem Fahrzeug sowie ein entsprechendes Fahrzeug und einen Zug, bestehend aus einer Vielzahl einzelner Fahrzeuge.

Zur Verkürzung der Umschlagzeiten von Gütern werden zunehmend normierte Lastträger verwendet, die als Einheiten auf Schiff, Bahn, oder Lkw wechselweise umgeschlagen und transportiert werden. Zunehmend werden auch im innerbetrieblichen Umschlagsverkehr derartige Lastträger eingesetzt. Als Lastträger kommen handelsübliche Container oder Schwertransportpaletten oder Wechselbehälter, z.B. gemäß DIN EN 284, im Sinne dieser Erfindung zum Einsatz, die mit Stützbeinen symmetrisch zur Behältermitte ausgerüstet sind und unter oder seitlich der Abstellfläche mit verschiedenen Abstützpunkten oder Zentrierbeschlägen bzw. an Zentriertunneln ausgestattet sind. Diese Beschläge dienen zur Lagerung und zur punktgenauen Positionierung der Lastträger auf einem Transportfahrzeug. Aus der EP-A 0 446 388 ist ein Wechselbehälterfahrzeug mit einer entsprechenden Zentriereinrichtung, bestehend aus einem pyramidenstumpfförmigen Sockel an mehreren Punkten der Fahrzeuglängsachse sowie am Wechselbehälter selbst angebrachte Profilschienen für die Ausrichtung und das Festspannen der Wechselbehälter auf dem Trägerfahrzeug. Die Wechselbehälter selbst werden offensichtlich durch andere Lastmittel auf das Transportfahrzeug gesetzt.

Aus der DE-U 89 08 416, insbesondere Figuren 1 bis 3, ist ein Paletten- und Behältertransportfahrzeug bekannt, das unter einen derartigen Lastträger, der seinerseits auf Stützfüßen steht, gefahren werden kann. Nachdem der Transporter in die richtige Position rangiert wurde, kann die Ladefläche des als Hubwagen konzipierten Fahrzeuges über vier Hydromotoren und entsprechende Hydraulikzylinder, die mit den Radantrieben gekoppelt sind, angehoben werden, so daß der Lastträger von der Ladefläche aufgenommen wird. Anschließend werden die Stützbeine des Lastträgers eingeklappt und in einer nicht näher bezeichneten Art und Weise der Lastträger auf der Ladefläche fixiert.

Ähnlich wie bei dieser Zugmaschine kann gemäß einer Veröffentlichung in der Deutschen Zeitschrift "Güterverkehr", Heft 12/92, Seite 47 ein kompletter Lkw-Aufbau oder eine Langgutpalette aufgenommen werden. Das dargestellte Schwerlaststraßenfahrzeug verfügt offensichtlich über zwei hydraulisch über Zugstangen betätigbare Knickhebel-Hubeinrichtungen, die den Lastträger anheben können, damit anschließend die Stützbeine weggeklappt werden und sodann der Lastträger auf die Ladeplattform abgesetzt werden kann.

Die Ladeeinrichtungen für derartige Lastträger gemäß dem Stand der Technik können offensichtlich einen derartigen Lastträger weder auf der Ladefläche zentrieren noch absolut vertikal anheben, was durch die Bauform der den Lastträger aufnehmenden Hubeinrichtung bedingt ist.

Ausgehend von diesem Stand der Technik liegt der Erfindung das Problem zugrunde, eine Ladevorrichtung bzw. ein Fahrzeug mit einer derartigen Ladevorrichtung zur Verfügung zu stellen, mit der ein Lastträger möglichst exakt senkrecht angehoben und auf einer Ladefläche zentriert werden kann.

Insbesondere im zunehmenden Güterverkehr für den Transport empfindlicher Güter, die absolut waagerecht transportiert werden müssen, ist eine derartige Ladevorrichtung erforderlich.

Das Problem wird erfindungsgemäß durch die Ansprüche 1, 13 und 14 gelöst. Weiterbildende Merkmale der Erfindung sind in den Unteransprüchen erfaßt.

Bei der vorliegenden Erfindung ist durch Verwendung zweier gegenläufig über Fluidzylinder antreibbarer schwingenähnlicher Hebel, die mit dem Fahrzeug drehgelenkig verbunden sind und deren Hubbewegung durch ebenfalls an das Fahrzeug angelenkte schwenkbewegliche Fluidzylinder bewirkt wird, sichergestellt, daß die Ladefläche, hier im wesentlichen ein Stützrahmen für den Lastträger, prinzipiell vertikal angehoben werden. Zusätzlich zu den gegenläufigen Schwingenbewegungen sind Mittel zum Waagerechthalten des Stützrahmens vorgesehen, die greifen sobald die Hubeinrichtung in Tätigkeit gesetzt wird. Diese Mittel oder Führungselemente wirken sowohl bei einer Hub- als auch Absenkbewegung des Stützrahmens. Außerdem ist vorgesehen am Stützrahmen Mittel zum waagerechten Versetzen des Lastträgers nach Anheben des Lastträgers vorzusehen. Durch diese kombinierten Elemente ist es möglich, Lastträger aufzunehmen und lagegenau auf der Ladefläche zu positionieren, selbst wenn das Trägerfahrzeug nicht zentrisch unter den Lastträger rangiert wird. Das lagegenaue Plazieren des Lastträgers auf der Ladefläche ist für eine kalkulierbare Lastverteilung auf dem Trägerfahrzeug wichtig. Zusätzlich besteht die Forderung bei vielen Trägerfahrzeugen, daß die Lastträger ein gewisses Lichtraumprofil seitlich des Trägerfahrzeuges nicht überschreiten dürfen, da sonst z.B. Tunnel oder andere Hindernisse außerhalb des Lichtraumprofiles nicht passiert werden können.

Als Fluidzylinder kommen sowohl Pneumatikzylinder als auch Hydraulikzylinder zum Einsatz, je nachdem mit welchem System das Trägerfahrzeug ausgerüstet ist. Für hohe Traglasten und hohe Verschiebekräfte bieten sich insbesondere Hydraulikeinrichtungen an.

Aufgrund der kreisförmigen Bewegungen der Köpfe der Schwingen während des Anhebens ist es zweckmäßig, diese am Stützrahmen in Rollenführungen zu lagern, wobei der Stützrahmen selbst beispielsweise aus H-förmigen oder U-förmigen Profilen zusammengesetzt sein kann, deren einzelne Profilabschnitte zugleich der Rollenführung dienen können. Es besteht jedoch auch die Möglichkeit, die Schwingen in Gleisführungen zu lagern oder die Profile auf Rollenketten, die wiederum mit den Köpfen der Schwingen verbunden sind, zu lagern.

Im einfachsten Falle wird der Stützrahmen bei einer Hubbewegung mittels der Schwingen waagerecht gehalten, indem am Fahrzeug selbst ein Führungselement, z.B. eine Rolle oder eine Gleitlagerung in Form eines Kulissensteines, angebracht wird und diese Rolle seitlich von vertikalen Führungsschienen, die ihrerseits unter dem Stützrahmen angeordnet sind, umgriffen werden. Eine Schwingenbewegung läßt ein Kippen des Stützrahmens nur innerhalb des Spieles dieser Vertikalführung zu.

In Weiterbildung der Erfindung können jedoch auch andere Führungseinrichtungen für eine exakte, zugleich aber weichere und verschleißärmere Vertikalführung eingesetzt werden. Der Stützrahmen selbst kann im einfachsten Falle durch je eine zentrisch hinten und vorn unter dem Stützrahmen angeordnete Schwinge mit seitlich angelenkten Druckzylinder ausgestattet sein. Zur Verteilung der Kräfte - es sollen beispielsweise Lastträger mit einem Gesamtgewicht von bis zu 20 Tonnen verladen werden - sollte jedoch jeder Stützrahmen vorn und hinten mit zwei Schwingen ausgestattet werden, die durch ein Profil miteinander verbunden sind. Dieses Profil dient zugleich für den Lastangriff des Fluidzylinders, so daß mit Hilfe von vier Schwingen und zwei Fluidzylindern der Stützrahmen sicher geführt und unterstützt wird. Bei einer derartigen Anordnung werden sinnvollerweise die Schwingenköpfe wiederum durch Querholme miteinander verbunden, die fliegend die Profile des Stützrahmens in einer Rollenlagerung oder Gleitlagerung, beispielsweise durch entsprechende den Stützrahmen umfassende Profilkörper, lagern. Diese Profilkörper sind in einem speziellen Fall mit Kolbenstangen eines seitlich am Stützrahmen angeordneten, doppelt, also in zwei Richtungen, wirkenden Fluidzylinders, der selbst keinen Antrieb besitzt, gekoppelt. Jedem Schwingenkopf bzw. der Führung der Schwinge am Stützrahmen ist ein derartiger Zylinder zugeordnet oder es sind auf beiden Seiten der Stützrahmen je Schwinge zwei derartige Zylinder angebracht. Durch eine Bewegung der Schwingen wird die Kolbenstange zwangsläufig ausgelenkt, da die Laschpunkte der Kolbenstange an den Schwingenköpfen sich relativ zu den auf den Stützrahmen sitzenden Zylindern bewegen. Durch diese Auslenkung der Kolbenstange erfolgt in einem Teil des Zylinders eine Druckerhöhung, während auf der Rückseite des Kolbens der Hubraumdruck verringert wird. Durch Kopplung der Druckseite eines Zylinders der einen Schwinge mit der Saugseite des Zylinders der anderen Schwinge läßt sich ein Überströmen des Druckmediums vom einen in den anderen Zylinder erreichen. Nach dem Prinzip der hydraulischen Waage werden sich die Drücke in allen vier Zylinderräumen der miteinander gekoppelten Zylinder gleich einstellen unter Vernachlässigung der Reibverluste beim Überströmen der Druckmedien. Durch Beeinflussung entsprechender Druckverluste läßt sich das Gesamtsystem nach Art eines Stoßdämpfers weich einstellen. Zugleich ist sichergestellt, daß die Schwingen gleichmäßig, d.h. bei waagerechtem Stützrahmen, gehoben oder gesenkt werden.

In einer weiteren Ausführungsform werden die Zylinder durch Schraubenfedern ersetzt. Auch mit den Schraubenfedern kann - vorausgesetzt es werden Federn gleicher Kennlinie verwendet - ein Zentrieren des Stützrahmens während der Vertikalbewegung erreicht werden. Dazu werden jedoch sinnvollerweise auf beiden Seiten jedes Stützrahmens zu jeder Schwinge eine Feder, d.h. insgesamt mindestens vier Federn angeordnet. Gegebenenfalls kann die Feder vorgespannt werden, um eine bestimmte Steifigkeit - auch lastabhängig - zu erhalten. In Falle der Verwendung von stoßdämpferähnlichen, antriebslosen Hydraulikzylindern oder den beschriebenen Schraubenfedern kann die Feder oder der Zylinder sich an einem Festpunkt des Stützrahmens abstützen. Es besteht jedoch auch die Möglichkeit den Festpunkt an das Fahrzeug zu verlegen, dann müßte der Laschpunkt der Feder bzw. des Zylinders am Fahrzeug jedoch drehbeweglich sein und der Schwingenbewegung folgen können.

In einer weiteren Variante werden die Schwingen durch ein Hebelgestänge zu einer parallelen Hubbewegung gezwungen. Dazu werden die Schwingenköpfe mit einem ersten am Schwingenkopf schwenkbeweglich gelagerten Hebel verbunden. Die beiden freien Hebelenden werden durch einen dritten Hebel, der seinerseits zentrisch am Stützrahmen gelagert ist, miteinander verbunden. Durch die zentrale Lagerung des mittleren Hebels wirkt dieser auf die an die Schwingenköpfe angelaschten Hebelstangen wie eine Zugstange, wobei die Bewegung eines Schwingenkopfes zwangsläufig zu einer entgegengesetzten gleichgroßen Bewegung des anderen Schwingenkopfes führt.

Erfindungsgemäß kann auch ein Zahnradtrieb für eine exakte, gleichgroße Hubbewegung der Schwingenköpfe genutzt werden. Dazu wird am Stützrahmen ein Zahnrad drehbeweglich gelagert. Zwei Zahnstangen sind zum einen mit diesem Zahnrad und zum zweiten mit den Schwingenköpfen oder deren Führungen am Stützrahmen so verbunden, daß die Hubbewegung eines Schwingenkopfes durch das Zahnrad in eine gegenläufige Bewegung der am anderen Schwingenkopf angelaschten Zahnstange umgesetzt. Dadurch ist sichergestellt, daß der Abstand zwischen dem Zahnrad und dem Schwingenkopf am Stützrahmen gleich ist, was zwangsläufig zu einer identischen Höhenlage des Stützrahmens an beiden Schwingenköpfen führt.

Wie zuvor beschrieben, ist die erfindungsgemäße Ladevorrichtung auch mit Mitteln zum waagerechten Versetzen des Lastträgers auf dem Stützrahmen ausgestattet, die es ermöglichen sollen, einen einmal per Hubeinrichtung aufgenommenen Lastträger zentrisch auf die Ladefläche zu setzen und/oder auf der Ladefläche vorhandene Zentriermittel z.B. Dorne oder Bolzen - Loch - Verbindungen zwischen dem Lastträger und der Ladefläche zu nutzen, wozu der Lastträger exakt in die Zentrierposition zu bringen ist. Ein besonderes Problem ergibt sich beispielsweise bei dem Versuch, eine Vielzahl von Lastträgern hintereinander über einem Gleis abzusetzen und diese beispielsweise von Waggons aufnehmen zu lassen. Dabei sollen verschieden lange und/oder breite und/oder mit unterschiedlicher lichter Höhe abgestellte Behälter von identischen Fahrzeugen aufgenommen werden. Diese Fahrzeuge, bilden dann einen kompletten Zug, eine komplette Transporteinheit, von der möglichst durch funktechnische oder zumindestens durch einfach zu bedienende Schalteinrichtungen gleichzeitig alle Lastträger im Zusammenwirken mit geeigneten Ladevorrichtungen aufgenommen werden. Dabei soll eine solche Kette von Lastträgern durch einen Zug nur einmal angefahren werden, ohne weiteren Rangierbetrieb. Die Waggons werden mit einer Hubeinrichtung für das Aufnehmen der über dem Gleis stehenden Lastträger bzw. für eine entsprechendes Absetzen der Lastträger ausgerüstet; diese Hubeinrichtung soll auch in der Lage sein, nach dem Positionieren der Transportfahrzeuge, die Lastträger innerhalb der zulässigen Toleranzen sicher zu erfassen, die Lastträger soweit anzuheben, daß die Stützbeine eingeklappt werden können und die Lastträger so genau zentrieren, daß sie nach dem Absenken auf die Ladefläche des Fahrzeuges nur noch für den anschließenden Transport verriegelt oder fixiert werden müssen. Dabei soll ein Ausgleich der Längentoleranzen zwischen den Waggons und insbesondere den einzelnen unterschiedlich langen Lastträgern möglich sein. Dafür sind erfindungsgemäß spezielle Versetzeinrichtungen des Lastträgers auf dem Stützrahmen vorgesehen. Der Stützrahmen hat auf seiner Oberfläche Gleitlager oder Lastrollen, auf denen der Lastträger nach Beendigung des Hubvorganges aufliegen kann. Die Lastrollen können angetrieben werden. Das Versetzen des Lastträgers kann durch manuelles Vorwärts- oder Rückwärtsfahren, z.B. im Tippbetrieb, mittels spezieller für einen derartigen Betrieb geeigneter Motore an den Rollen erfolgen. Es ist jedoch auch möglich auf dem Stützrahmen oder dem Fahrzeug Positionsgeber z.B. Lichtschranken oder ähnliches anzuordnen, aus deren Meßergebnis ein Antriebssignal für die richtige Drehrichtung der Lastrollen gewonnen wird. Die Lastrollen können auch als Schrägrollen oder Diagonalrollen oder auch als Allseitenrollen ausgebildet sein, um zugleich eine Positionierung des Lastträgers in Längs- als auch in Querrichtung zur Ladefläche oder dem Stützrahmen zu ermöglichen. Dies ist insbesondere dann möglich, wenn an dem Lastträger selbst eine Zentriereinrichtung, z.B ein längs unter dem Lastträger verlaufendes Profil als Anschlag für die Rollen dienen kann.

Eine andere Art den Lastträger zumindestens in Fahrzeuglängsrichtung zu zentrieren, wird durch eine spezielle Zentriereinrichtung ermöglicht, die in Längsrichtung zum Fahrzeug und zum Stützrahmen relativ bewegliche Zugmittel aufweist. Ein derartiges Zugmittel kann ein teleskopartig verfahrbarer Zylinder oder eine Lastkette sein, die an ihren Enden Anschlagstücke oder Mitnehmer zum Hintergreifen des Lastträgers haben. Diese Anschlagstücke oder Mitnehmer können zunächst soweit in Längsrichtung auf dem Stützrahmen auseinandergefahren werden, daß mit Sicherheit der Mitnehmer hinter dem Lastträger in Position gerät. Sodann wird durch Änderung der Antriebsrichtung das Zugmittel solange in Richtung Fahrzeugmitte bewegt, bis die Mitnehmer hinter dem Lastträger verhaken und diesen in Richtung Mitte der Ladefläche zieht, bis der Lastträger zwischen den Mitnehmern gespannt ist. Dieses nach einem dem Schraubstock ähnlichen Prinzip arbeitende Zentriermittel wird sinnvollerweise ergänzt durch eine Überlastsicherung, deren Ausbildung von der Art des gewählten Zugmittels abhängig ist. Bei Verwendung beispielsweise eines Hydraulikzylinders kann eine Kraftbegrenzung durch ein Überdruckventil erfolgen; bei der Wahl z.B. einer Rollenkette als Zugmittel kann beispielsweise eine Rutschkupplung eingesetzt werden. Da die meisten Ladevorrichtungen bzw. Ladeflächen jedoch mit formschlüssigen Zentriermitteln auf der Ladefläche arbeiten, wird der Lastträger seine Zentrierpositon erreicht haben, bevor eine Überlastung des Zugmittels geschieht. Lediglich bei vollständiger Automatisierung der Zentriersysteme muß regelmäßig eine Überlastsicherung vorgesehen werden, weil der Bedienungsmann für ein Zentriermittel dann nicht mehr eingreifen kann.

Letztlich ist erfindungsgemäß vorgesehen, daß Eisenbahnwaggons oder ein angetriebenes Trägerfahrzeug oder ein Anhänger für ein derartiges Trägerfahrzeug mit einer erfindungsgemäßen Ladevorrichtung ausgestattet ist. Schließlich können komplette Züge mit Eisenbahnwaggons vorgesehen werden, die derartige Ladevorrichtungen tragen, wobei sämtliche Ladevorrichtungen an das energetische System des Zuges und auch das Steuersystem gekoppelt werden können, so daß eine Kette von auf Stützbeinen abgesetzten Lastträgern komplett durch eine einzige Schalteinrichtung gemeinsam angehoben und auch gemeinsam auf den Waggon zentriert werden können.

Anhand einiger schematischer Zeichnungen soll die Erfindung näher erläutert werden.

Es zeigen:
- Fig. 1:: eine Draufsicht auf einen Waggon mit einer Ladevorrichtung,
- Fig. 2:: einen Schnitt nach der Linie II - II der Fig. 1 ,
- Fig. 3:: eine Draufsicht auf eine zu Fig. 1 alternative Waggonausführung,
- Fig. 4:: einen Schnitt nach der Linie IV - IV der Fig. 3,
- Fig. 5 bis 12:: unterschiedliche Ausführungen von Vertikalführungen für die Ladevorrichtung in Seitenansicht und Draufsicht.

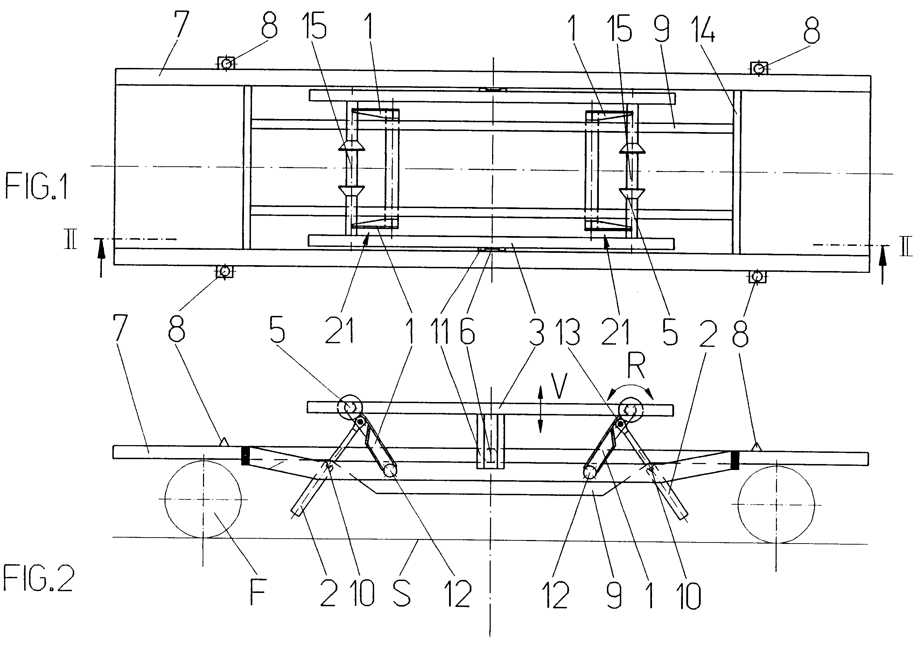

Gleichwirkende bzw. gleichgebaute Teile sind in der folgenden Beschreibung mit identischen Bezugsziffern versehen. Ein Fahrzeug F, hier ein Eisenbahnwaggon auf Schienen S, hat eine Ladefläche 7 mit Zentriereinrichtungen für einen nichtdargestellten Lastträger, der auf dieser Ladefläche 7 zu Positionieren ist. Mittig zum Waggon wird ein unter dem Niveau der Ladefläche 7 liegendes Wangengerüst aus Holmen 9 und 14 angeordnet, welches seinerseits eine Hubeinrichtung für die Aufnahme des Lastträgers trägt. Diese Hubeinrichtung besteht aus einem in Vertikalrichtung V beweglichen Stützrahmen 3, der in Vertikalrichtung durch eine Rolle 6 an der Ladefläche 7 und seitliche vertikale Schienenführungen 11 geführt wird. Die Vertikalbewegung wird erzeugt durch zwei gegenläufig in Wipprichtung R schwenkbewegliche Schwingen 21, bestehend aus je zwei parallelen Schwingenarmen 1 und einer die Schwingenarme verbindende und in den Holmen 9 gelagerten Schwenkachse 12 (Fig. 2). Die Schwingarme 1 können durch in Drehgelenke 13 einerseits angelaschte hydraulische Zylinder 2 geschwenkt werden, wobei die Zylinder 2 in Drehachsen 10 mit den unter der Ladefläche 7 liegenden Holmen 9 schwenkbeweglich gekoppelt sind. Die Schwingenarme 1 sind an ihren Köpfen durch eine Achse 15 verbunden, auf der parallele Lastrollen 5 drehbeweglich angeordnet sind. In der Draufsicht - Fig. 1 - sind die Hydraulikzylinder 2 nicht dargestellt. Die die Schwingarme 1 verbindenden Achsen 15 weisen an ihren Enden innerhalb des Stützrahmens 3, der z.B. mit H-Profile gebildet ist, beiderseitig eine Rollenlagerung 19 auf, so daß die Achsen 15 innerhalb des Stützrahmens ihre Position entsprechend dem Schwenkwinkel der Schwingarme 1 ändern können. Fig. 2 zeigt den Stützrahmen 3 in etwas ausgefahrener Position, in der ein Lastträger auf den Lastrollen 5 aufgenommen werden könnte.

Die Lastrollen 5 sind mit einem nicht dargestellten Antrieb versehen, so daß sie in Richtung R vor- und rückwärts bewegbar sind, um einen Lastträger - nicht dargestellt - soweit in Längsrichtung zur Ladefläche 7 verfahren zu können, daß an dem Lastträger angeordnete Rastelement auf die Zentriereinrichtungen der Ladefläche 7 positioniert werden können. Sobald die Lastträger auf der Ladefläche 7 abgesetzt sind, ruht der Stützrahmen 3 unterhalb des Niveaus der Ladefläche 7 auf den in Waggonlängsrichtung ausgerichteten Holmen 9 des Wangengerüstes.

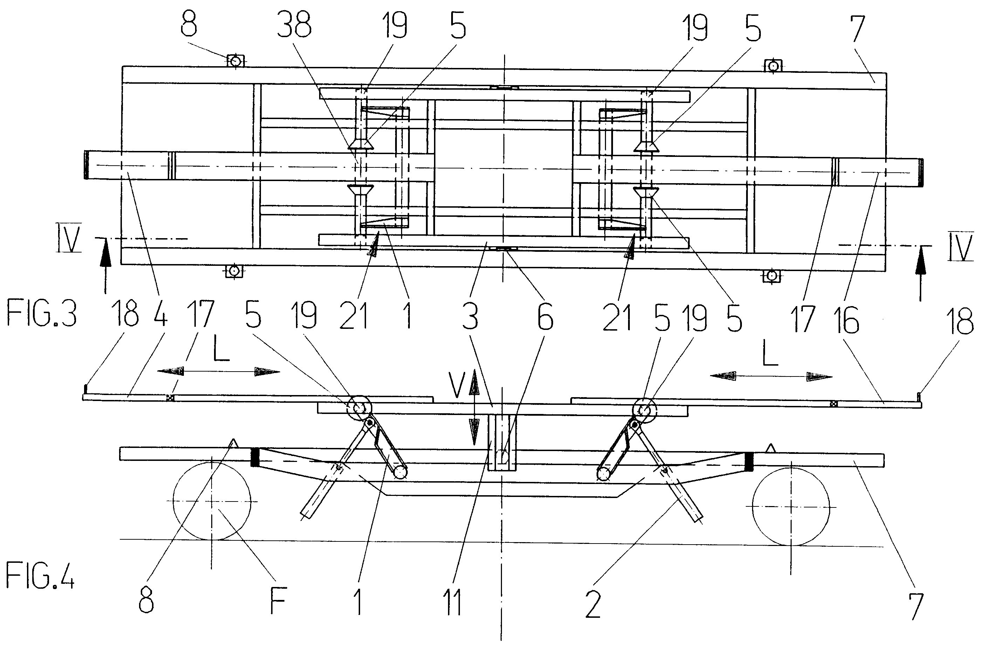

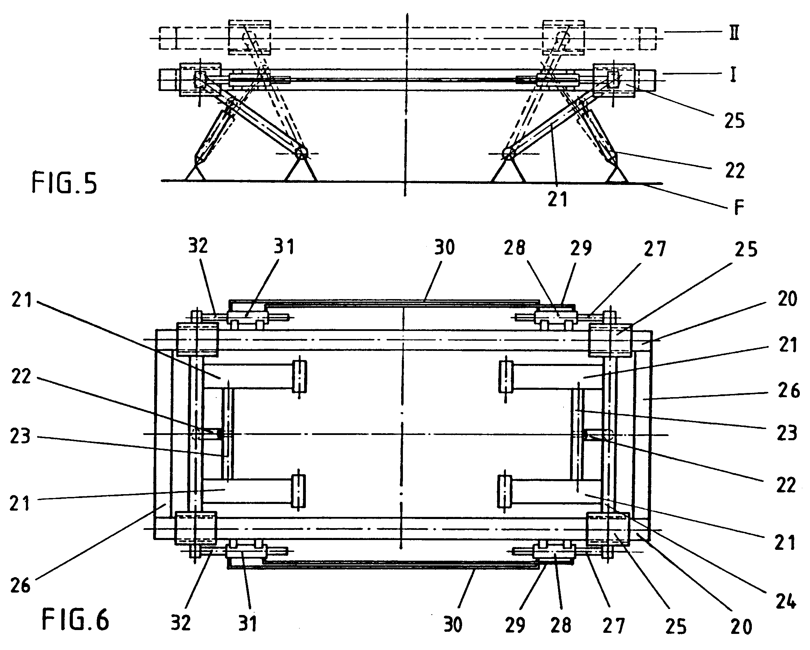

Die Fig. 3 und 4 zeigen in analoger Weise zu den Fig. 1 und 2 eine ähnliche Ladevorrichtung, jedoch ist diese zusätzlich mit einer alternativen Zentriereinrichtung für den Lastträger versehen. Es wird unterstellt, daß die gegenläufig zur Waggonmitte schwenkenden Schwingenarme 1 den Stützrahmen 3 aufgrund einer entsprechenden Vertikalführung 6, 11 zwar ausschließlich senkrecht anheben und dabei den Stützrahmen 3 waagerecht halten, jedoch kann der nichtdargestellte Lastträger außermittig zum Waggon stehen, so daß er in Längsrichtung zu positionieren ist. Dazu dienen spezielle Zugmittel 4, 16, die in den Fig. 3, 4 in ausgefahrenem Zustand dargestellt sind. Die Zugmittel 4,16 können z.B. als Zahnstangen ausgebildet sein, die seitlich durch die Lastrollen 5 auf der die Schwingarme 1 verbindenden Achse 15 geführt werden und über Ritzel 38 in Richtung L zur Fahrzeugmitte soweit bewegt werden, bis sie aneinander anschlagen. Die Länge der Zahnstangen 4, 16 ist auf die größte Länge der aufzunehmenden Laststräger abgestimmt. Die Zahnstange 4, 16 weist jedoch Gelenke 17 auf, die sowohl zum Ansatz von Verlängerungsstücken für die Zahnstange 4, 16 dienen können, als auch zum Abknicken der Zahnstange 4, 16, wenn der Lastträger einmal außerhalb des Fangbereiches der Zahnstangen 4, 16 positioniert ist. Am Ende der Zahnstangen 4, 16 sind Anschlagstücke 18 angeordnet, die als Mitnehmer für den nichtdargestellten Lastträger dienen. Werden die Ritzel 38 in Richtung Fahrzeugmitte angetrieben, wird eines der Anschlagstücke 18, entweder auf der Zahnstange 16 oder Zahnstange 4 den Lastträger greifen und in Richtung Fahrzeugmitte ziehen, bis er über den Zentrierdornen 8 angelangt ist. Dann kann der Stützrahmen 3 mit Hilfe der Hydraulikzylinder 2 abgesenkt werden, so daß der Lastträger auf die Ladefläche 7 abgelegt wird.

Fig. 5 zeigt in Seitenansicht und Fig. 6 in Draufsicht eine spezielle Führungseinrichtung, die alternativ zu den Vertikalführungen gemäß den Fig. 1 bis 4 ein kontinuierlich waagerechtes Anheben des Stützrahmens aus der Position I (Fig. 5) in Position II ermöglichen soll. In den Fig. 5 bis 12 sind nur der Fahrzeugunterbau F schematisch und der Stützrahmen, bestehend aus den Profilen 20, 26 dargestellt. Der Übersichtlichkeit halber sind die übrigen Teile eines Waggons bzw. Lkw-Anhängers weggelassen worden. Der Stützrahmen 20, 26 kann über die Schwinge 21, die in Führungen 24 am Stützrahmen 20, 26 längsbeweglich gelagert ist, mit Hilfe eines Fluidzylinders 22 angehoben werden. Während dieser Hubbewegung wird der mit Festlagern am Stützrahmen 20, 26 angebrachte, doppelt wirkende, d.h. mit durchgehender Kolbenstange 27 und nicht dargestelltem Kolben innerhalb des Zylinderraumes ausgestattete, antriebslose Hydraulikzylinder 28 zwangsweise wie ein Stoßdämpfer bewegt. Die Schwingenarme 21, verbunden durch Querträger 23, an dem der Fluidzylinder 22 angreift, haben eine an den Köpfen der Schwingarme 21 fixierte Verbindungsstange, die in einer fliegenden Lagerung 25 endet. An diese Lagerung 25 sind die Kolbenstangen 27 (rechtes Teilbild) angelascht. Auf der Gegenseite (linkes Teilbild) sind identische Hydraulikzylinder 31 mit Kolbenstange 32 mit den Schwingen 21 indirekt verbunden. Bei Bewegung der Kolbenstange 27 durch Heben des Stützrahmens 20, 26 aus der Position I in die Position II wird zwangsläufig die Kolbenstange 27 in den Zylinder 28 gedrückt, dadurch wird das Ölvolumen im Hadraulikzylinder 28 über die Leitung 30 in den an der gegenläufigen Schwinge 21 gekoppelten Hydraulikzylinder 31 gedrückt. In gleicher Weise wirkt Kolbenstange 32, in dem Drucköl über die Leitung 29 in den Zylinder 28 gedrückt wird und die Schwingenbewegung unterstützt und gleichzeitig für einen Druckausgleich im hydraulischen System sorgt. Dadurch wird zwangsweise der Stützrahmen 20, 26 in der Waagerechten gehalten.

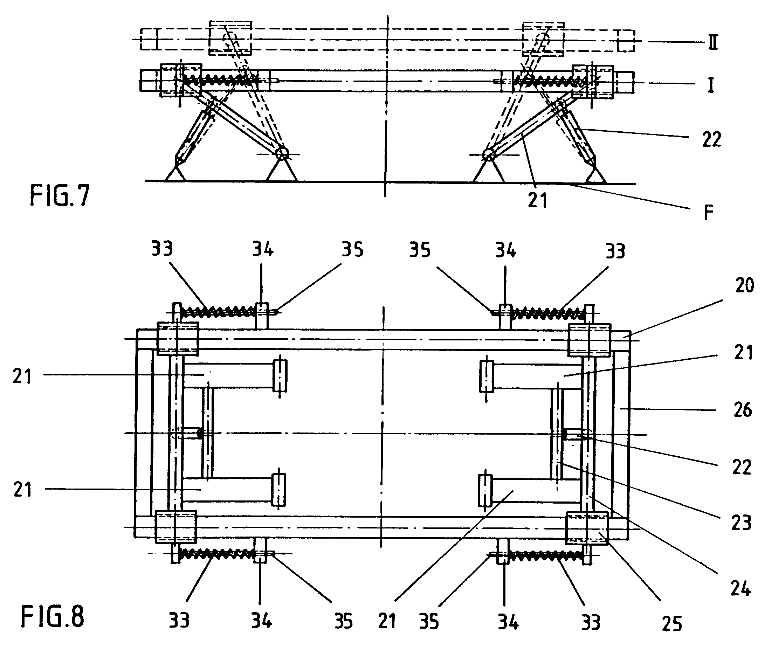

Fig. 7 und 8 zeigen analog zu den Fig. 5 und 6 einen Stützrahmen 20, 26 in den Hubpositionen I und II. Anstelle der Hydraulikzylinder 28, 31 sind am Profil 20 des Stützrahmens 20, 26 auf einer Führungsstange 35 Federn, z.B. Schraubenfedern 33 aufgefädelt, die sich zwischen der Verbindungstange der Köpfe der Schwingarme 21 und einem Festlager 34 am Stützrahmen 20, 26 erstrecken. Alle Schraubenfedern 33 haben die gleiche Federkennlinie und wirken daher wie die Hydraulikzylinder28, 31 gemäß den Fig. 5 und 6, als zentrierende Spanneinheit auf die gegenläufig bewegbaren Schwingen 21 für eine exakte Vertikalführung bzw. Waagerechthaltung des Stützrahmens 20,26.

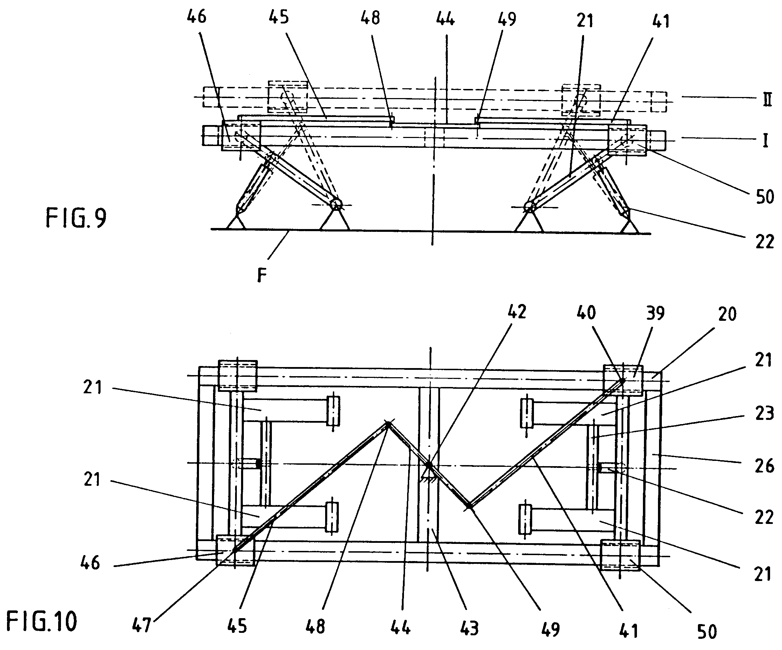

Die Fig. 9 und 10 zeigen wiederum den prinzipiellen Aufbau eines Fahrzeuges F und die verschiedenen Hubpositionen I und II eines Stützrahmens 20, 26 in Draufsicht und Seitenansicht. In dieser Ausführungsform wird ein Niveauausgleich zwischen den Schwingen 21 sichergestellt, indem die Führungen 39, 46 auf den Teilen 20 des Stützrahmens 20, 26 durch ein Hebelgestänge mit drei Hebeln 41, 44, 45 verbunden sind. Der Hebel 41 ist in Drehgelenk 40 mit der Führung 39 einerseits und in Drehgelenk 49 mit einem weiteren Hebel 44 gekoppelt. Der Hebel 44 sitzt auf einem zentralen Verbindungssteg 43 zwischen den Wangen des Stützrahmens 20 und trägt mittig wiederum ein Drehgelenk 42 für den Hebel 44. Die zweite Seite des Hebels 44 weist ebenfalls ein Drehgelenk 48 auf, mit dem der Hebel 45 einerseits und in Drehgelenk 47 der Führung 46 andererseits schwenkbeweglich gelagert ist. Sobald sich die Schwingen 21 (rechtes Teilbild) und damit die Führungen 39, 50 auf dem Stützrahmen 20 (Fig. 10) aus der Position I (Fig. 9) in die Position II bewegen, wird durch Verkürzung des Abstandes zwischen der Führung 39 und dem Lager 42 des mittleren Hebels 44 diesem Hebel ein rechtsdrehendes Moment aufgeprägt, so daß der Hebel 45 wie eine Zugstange auf die Führung 46 wirkt.

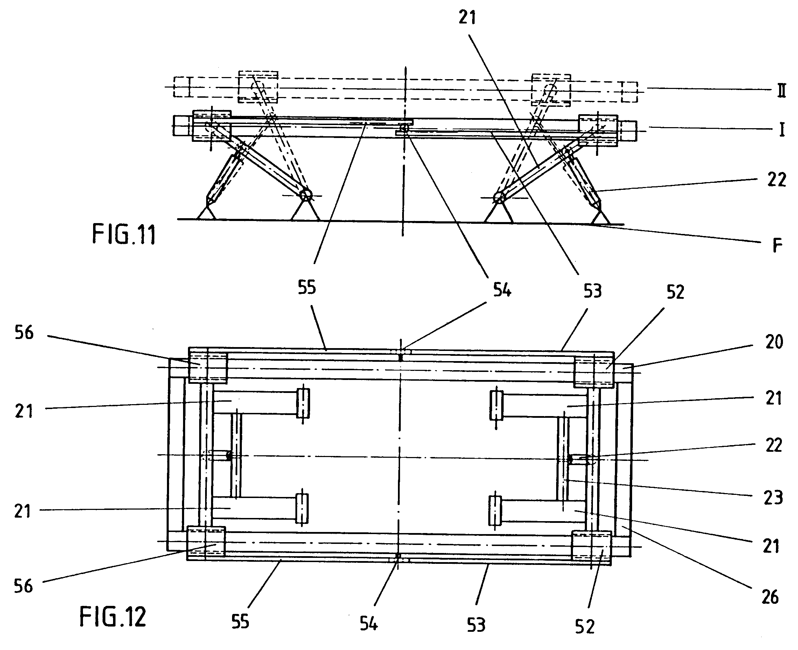

Ein anderes Zugstangensystem ist in Fig. 11 in Seitenansicht und in Fig. 12 in Draufsicht dargestellt, wiederum angeordnet an einer Ladevorrichtung, die schematisch durch das Fahrzeug F und die Positionen I und II eines Stützrahmens 20, 26 dargestellt sind. Anstelle eines diagonal wirkenden Hebelgestänges weist hier der Stützrahmen 20, 26 an seinen beiden Seiten Ritzel 54 auf, die mit Zahnstangen 53, 55 kämmen. Die Zahnstangen 53, 55 sind andererseits mit den Führungen 52 der Schwingen 21 am Stützrahmen 20, 26 (rechtes Teilbild in Fig. 12) bzw. den Führungen 56 (linkes Teilbild) gekoppelt. Bei einer Bewegung der Schwinge 21 verkürzt sich der Abstand zwischen den Führungen 52 bzw. 56 und den Ritzeln 54, was zu einer gegenläufigen Bewegung der Zahnstangen 53, 55 führt. Diese Zwangskopplung garantiert ein gleichmäßig waagerechtes Heben des Stützrahmens 20, 26 aus der abgesenkten Position I in die Hubposition II.

## Patentansprüche

1. Ladevorrichtung für Lastträger, insbesondere genormte Wechselbehälter, umfassend wahlweise einzelne oder kombinierte Hub-, Zentrier- und Feststelleinrichtungen zur lagegenauen Plazierung des Lastträgers auf einem Fahrzeug (F), wobei die antreibbare Hubeinrichtung (1, 2, 21, 22) auf einem Fahrzeug angeordnet ist und einen über mindestens Zwei Schwingen (1; 21, 23) höhenbeweglichen, waagerechten Stützrahmen (3, 20, 26) hat, welcher Mittel (6, 11; 27-32; 33-38; 41-45; 53-55) zum Waagerechthalten des Stützrahmens (3, 20, 26) während einer Vertikalbewegung und Mittel (4, 5, 16, 18) zum waagerechten Versetzen des Lastträgers auf dem Stützrahmen (3, 20, 26) aufweist.

2. Ladevorrichtung nach Anspruch 1, dadurch gekennzeichnet, daß die Schwingen (1, 21) um eine Schwenkachse (12) an dem Fahrzeug (F) mittels antreibbarer, am Fahrzeug befestigter Fluidzylinder (2, 22) gegenläufig schwenkbeweglich sind.

3. Ladevorrichtung nach Anspruch 1 oder 2, dadurch gekennzeichnet, daß der Stützrahmen (3, 20, 26) an den Schwingen (1, 21) in Rollen- oder Gleitführungen (19, 25, 39, 46, 50, 52, 56) gelagert ist.

4. Ladevorrichtung nach einem der Ansprüche 1 bis 3, dadurch gekennzeichnet, daß die Mittel zum Waagerechthalten des Stützrahmens (3) ein Führungselement (6) am Fahrzeug (F) umfassen, welches in unter dem Stützrahmen (3) angeordneten vertikalen Führungsschienen (11) relativ beweglich ist.

5. Ladevorrichtung nach einem der Ansprüche 1 bis 3, dadurch gekennzeichnet, daß die Mittel zum Waagerechthalten des Stützrahmens (20, 26) mindestens je einen mit zwei gegenläufigen Schwingen (21) verbundenen und einem Punkt am Stützrahmen (20, 26) oder Fahrzeug (F) gelagerten, antriebslosen, in zwei Richtungen gegenläufig wirkenden Fluidzylindern (28 bzw. 31) umfassen, wobei ein Druckraum eines Zylinders (28) einer Schwinge (21) mit einem Hubraum des anderen Zylinders (31) der anderen Schwinge (21) zum Überströmen des Druckmediums durch Fluidleitungen (29 bzw. 30) verbunden ist.

6. Ladevorrichtung nach einem der Ansprüche 1 bis 3, dadurch gekennzeichnet, daß die Mittel zum Waagerechthalten des Stützrahmens (20, 26) mindestens je eine mit den gegenläufigen Schwingen (21) einerseits und andererseits in einem Festlager (34) am Stützrahmen (20, 26) oder Fahrzeug (F) gelagerten, gleichwirkenden Federn (33) umfassen.

7. Ladevorrichtung nach einem der Ansprüche 1 bis 3, dadurch gekennzeichnet, daß die Mittel zum Waagerechthalten des Stützrahmens (20, 26, 43) ein zwischen gegenläufigen Schwingen (21) angeordnetes Hebelgestänge am Stützrahmen (20, 26, 43) umfassen, wobei ein zentrisch zu dem Stützrahmen (20, 26, 43) und mittig gelagerter schwenkbeweglicher Hebel (42) an seinen entgegengesetzten Enden (48, 49) schwenkbeweglich mit mit den Schwingen (21) gekoppelten Hebeln (41, 45) verbunden ist.

8. Ladevorrichtung nach einem der Ansprüche 1 bis 3, dadurch gekennzeichnet, daß die Mittel zum Waagerechthalten des Stützrahmens (20, 26) eine zwischen gegenläufigen Schwingen (21) angeordnete verzahnte Führungseinrichtung umfaßt, wobei mindestens ein Zahnrad (54) mit zwei gegenläufig bewegbaren und mit den Schwingen (21) verbundenen Zahnstangen (53 bzw. 55) kämmend gelagert ist.

9. Ladevorrichtung nach einem der Ansprüche 1 bis 8, dadurch gekennzeichnet, daß die Mittel zum waagerechten Versetzen des Lastträgers auf dem Stützrahmen (3) dort angeordnete Gleitlager oder Lastrollen (5) umfassen, auf denen der Lastträger nach Beendigung des Hubvorganges aufliegen kann.

10. Ladevorrichtung nach einem der Ansprüche 1 bis 9, dadurch gekennzeichnet, daß die Mittel zum waagerechten Versetzen des Lastträgers auf dem Stützrahmen (3) ein Zentriermittel umfassen, das mindestens zwei gegenläufig, in Längsrichtung zum Fahrzeug (F) und Stützrahmen (3) relativ bewegliche Zugmittel (4, 16) hat, die an ihren Enden Anschlagstücke (18) zum Hintergreifen des Lastträgers aufweisen und die Zugmittel (4, 16) so lange in Richtung Fahrzeugmitte bewegbar sind, bis die Anschlagstücke (18) den Lastträger zwischen sich fixieren.

11. Ladevorrichtung nach Anspruch 9 oder 10, dadurch gekennzeichnet, daß die Lastrollen (5) antreibbar sind.

12. Ladevorrichtung nach einem der Ansprüche 1 bis 11, dadurch gekennzeichnet, daß die Lastrollen (5) als Schrägrollen oder Allseitenrollen ausgebildet sind.

13. Fahrzeug, insbesondere Eisenbahnwaggon, ausgerüstet mit einer Ladevorrichtung nach einem der Ansprüche 1 bis 12.

14. Zug mit Eisenbahnwaggons gemäß Anspruch 13, gekennzeichnet durch eine Kopplung alle Ladevorrichtungen der einzelnen Waggons des Zuges und eine Schalteinrichtung für ein gemeinsames Betätigen alle Hub- und/oder Zentriereinrichtungen und/oder Feststelleinrichtungen der Waggons.
